# EUROPÄISCHE PATENTSCHRIFT

(11) **EP 3 309 589 B1**
(45) Veröffentlichungstag und Bekanntmachung des Hinweises auf die Patenterteilung: **20.01.2021**
(21) Anmeldenummer: 16193772.7
(22) Anmeldetag: 13.10.2016
(51) Int. Cl.: G01T 1/17, G01F 1/00, G01T 7/00

(54) **RADIOMETRISCHES MESSGERAET FUER ZWEILEITERBETRIEB MIT EINER BYPASSLEITUNG**
RADIOMETRIC METER FOR TWO LINE OPERATION WITH A BYPASS LINE
APPAREIL DE MESURE RADIOMÉTRIQUE POUR FONCTIONNEMENT À DEUX CONDUCTEURS AVEC UNE CONDUITE DE DÉRIVATION

(43) Veröffentlichungstag der Anmeldung: 18.04.2018
(73) Patentinhaber: VEGA Grieshaber KG, 77709 Wolfach (DE)
(72) Erfinder: KÖRNLE, Ralf, 77736 Zell A. H. (DE)
(74) Vertreter: Maiwald Patent- und Rechtsanwaltsgesellschaft mbH

(56) Entgegenhaltungen:
- WO-A1-2010/138574
- DE-A1-102007 033 671
- US-A1- 2007 285 300
- PULLIA A ET AL: "Extending the dynamic range of a charge-preamplifier far beyond its saturation limit: A 0.35Î 1/4 m CMOS preamplifier for germanium detectors", 2009 IEEE NUCLEAR SCIENCE SYMPOSIUM AND MEDICAL IMAGING CONFERENCE (NSS/MIC 2009), ORLANDO, FL, USA, IEEE, PISCATAWAY, NJ, USA, 24 October 2009 (2009-10-24), pages 1919-1923, XP031826771, ISBN: 978-1-4244-3961-4

## Beschreibung

### Gebiet der Erfindung

Die Erfindung betrifft die radiometrische Füllstandmessung, die radiometrische Dichtemessung, die radiometrische Grenzstandmessung und die radiometrische Durchsatzmessung. Insbesondere betrifft die Erfindung ein radiometrisches Messgerät mit einer Bypassleitung, sowie ein Verfahren zum Messen eines Füllstands, eines Grenzstands, einer Dichte oder eines Durchsatzes mit einem radiometrischen Messgerät, ein Programmelement und ein computerlesbares Medium.

### Hintergrund

Bei der radiometrischen Füllstand-, Grenzstand-, Dichte- oder Durchsatzmessung werden die von einem radioaktiven Strahler ausgesendeten und durch das Füllgut gelangenden radioaktiven Strahlen detektiert und in elektrische Pulse umgewandelt. Zur Detektion der radioaktiven Strahlung kann ein Szintillator vorgesehen sein, der daraus Lichtpulse erzeugt, die von einem nachgeschalteten Detektor, beispielsweise ein Photomultiplier (PMT), eine Avalanche-Photodiode (APD) oder ein SiliziumPhotomultiplier (SiPM), in elektrische Pulse umgewandelt werden. Alternativ kann ein Geiger-Müller-Zählrohr vorgesehen sein. Diese Signale werden dann von einer Auswerteschaltung ausgewertet, um den Füllstand, den Grenzstand, die Dichte oder den Durchsatz zu bestimmen.

Diese Messgeräte weisen einen signifikanten Energiebedarf auf.

WO 2010/138574 A1 beschreibt einen Computertomographen mit einem Verstärker.

DE 10 2007 033 671 A1 beschreibt die adaptive Datenakquisition für eine Bildgebungsvorrichtung mit einer Datenakquisitionsschaltung, die einen Verstärker zum Verstärken von elektrischen Pulsen aufweist.

Pullia A. et al., "Extending the dynamic range of a charge-preamplifier far beyond its saturation limit: A 0.35 µm CMOS preamplifier for germanium detectors", 2009 IEEE Nuclear Science Symposium and Medical Imaging Conference Record, beschreibt eine Vorverstärkerschaltung.

US 2007/0285300 A1 beschreibt einen Analog/Digitalkonverter für eine mikroelektronische Bildsensorvorrichtung.

### Zusammenfassung der Erfindung

Es ist eine Aufgabe der Erfindung, den Energiebedarf eines radiometrischen Messgeräts zu verringern.

Diese Aufgabe wird durch die Gegenstände der unabhängigen Patentansprüche gelöst. Weiterbildungen der Erfindung ergeben sich aus den Unteransprüchen und der folgenden Beschreibung.

Ein erster Aspekt der Erfindung betrifft ein radiometrisches Messgerät, welches eine Detektoranordnung, einen Integrator bzw. eine Integratorschaltung, eine Steuerschaltung und eine Bypassleitung aufweist.

Die Detektoranordnung dient dem Umwandeln von radioaktiver Strahlung in ein elektrisches Signal, bei dem es sich typischerweise um einen oder mehrere Strompulse handelt. Der Integrator ist zum Aufintegrieren des von der Detektoranordnung erzeugten elektrischen Signals ausgeführt, was zu einem Aufladen des Integrators führt.

Wird das von der Detektoranordnung erzeugte elektrische Signal detektiert, beispielsweise durch die Steuerschaltung, schließt die Steuerschaltung einen Schalter in der Bypassleitung, sodass ein Bauelement des Integrators schnell entladen wird. Ist der Schalter geschlossen, fließt der wesentliche Anteil des Stroms somit nicht mehr durch andere Bauelemente des Integrators, sondern durch die Bypassleitung daran vorbei.

Der Integrator weist ein Bauelement auf, welches die von der Detektoranordnung abgegebene Ladung, oder in anderen Worten, das elektrische Signal, zumindest teilweise speichert. Bei diesem Bauelement handelt es sich um einen Kondensator. Zusätzlich kann der Integrator einen elektrischen Widerstand aufweisen, der parallel zum Kondensator geschaltet ist. Somit handelt es sich bei dem Integrator um ein RC-Glied. Die Bypassleitung mit dem Schalter ist parallel zu dem Ladungsspeicher des Integrators angeordnet und, falls ein solcher vorgesehen ist, auch parallel zum elektrischen Widerstand.

Durch Schließen des Schalters nach Aufladen des Integrators wird die Entladezeit des Integrators verkürzt, da die gespeicherte Ladung recht schnell über die Bypassleitung abfließen kann, die einen sehr geringen Widerstand aufweist.

Gemäß einer Ausführungsform der Erfindung ist die Steuerschaltung zum Öffnen des Schalters nach einer voreingestellten Zeitspanne seit dem Schließen des Schalters ausgeführt. Beispielsweise beträgt die voreingestellte Zeitspanne τ das Zwei- bis Zehnfache, das Vier- bis Sechsfache oder beispielsweise das Fünffache des Produktes aus Kapazitätswert des Kondensators und des Widerstandswerts des elektrischen Widerstands des Integrators (τ = 5RC). Typischerweise wird sich die voreingestellte Zeitspanne im Bereich von wenigen Mikrosekunden befinden. Gemäß einer Ausführungsform der Erfindung weist die Detektoranordnung einen Szintillator und einen Photomultiplier bzw. Siliziumphotomultiplier auf. Alternativ kann die Detektoranordnung auch ein Geiger-Müller-Zählrohr aufweisen.

Gemäß einer weiteren Ausführungsform der Erfindung ist das radiometrische Messgerät zum Anschluss an eine 4...20 mA Zweileiterschleife ausgeführt, über welche das Messgerät mit der zu seinem Betrieb erforderlichen elektrischen Energie versorgt wird. Über die Zweileiterschleife kann auch die Datenkommunikation mit einem externen Gerät erfolgen.

Ein weiterer Aspekt der Erfindung betrifft ein Verfahren zum Messen eines Füllstands, eines Grenzstands, einer Dichte oder eines Durchsatzes mit einem radiometrischen Messgerät, bei dem zunächst radioaktive Strahlung in ein elektrisches Signal umgewandelt wird. Daraufhin wird das elektrische Signal integriert, indem ein Ladungsspeicher einer Integratorschaltung damit aufgeladen wird. Bei diesem Ladungsspeicher handelt es sich um einen Kondensator. Das elektrische Signal wird beispielsweise von einer Steuerschaltung detektiert, welche daraufhin ein Bauelement der Integratorschaltung mittels einer Bypassleitung umgeht (indem ein entsprechender Schalter in der Bypassleitung geschlossen wird). Hierdurch soll die Entladezeit der Integratorschaltung verkürzt werden. Nachdem der Integrator aufgeladen wurde, erfolgt ein Auswerten der im Integrator zwischengespeicherten elektrischen Ladung, beispielsweise indem die Spannung am Kondensator gemessen wird. Sobald der Integrator entladen ist, steht er für die Integration eines weiteren elektrischen Signals und somit für die Detektion eines neuen Pulses bereit.

Ein weiterer Aspekt der Erfindung betrifft ein Programmelement, das, wenn es auf einer Steuerschaltung eines radiometrischen Messgeräts ausgeführt wird, das Messgerät anleitet, die oben und im Folgenden beschriebenen Schritte durchzuführen.

Ein weiterer Aspekt der Erfindung betrifft ein computerlesbares Medium, auf dem ein oben beschriebenes Programmelement gespeichert ist.

Im Folgenden werden Ausführungsbeispiele der Erfindung unter Bezugnahme auf die Figuren beschrieben.

### Kurze Beschreibung der Figuren

Fig. 1 zeigt ein Prinzipschaltbild eines radiometrischen Messgeräts.
Fig. 2 zeigt ein Prinzipschaltbild eines radiometrischen Messgeräts gemäß einem Ausführungsbeispiel der Erfindung.
Fig. 3 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich. Werden in verschiedenen Figuren die gleichen Bezugszeichen verwendet, so bezeichnen diese gleiche oder ähnliche Elemente.

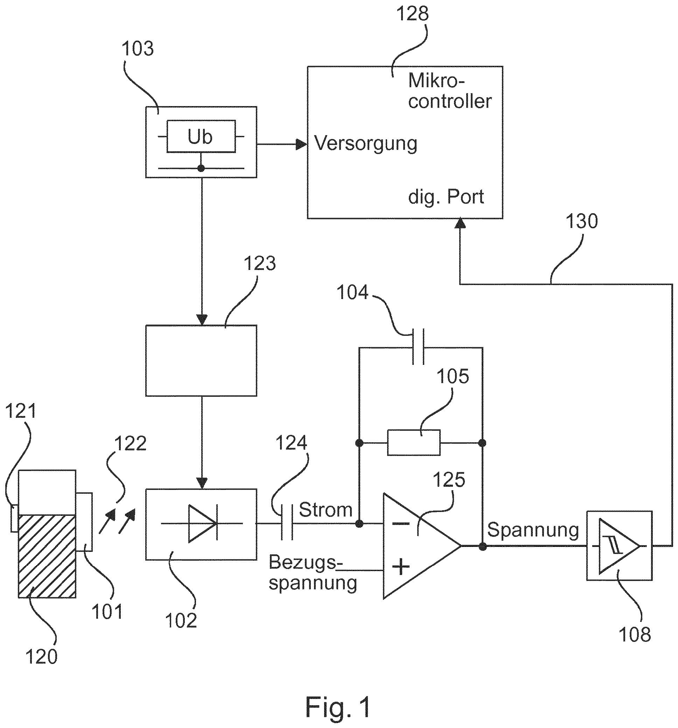

Fig. 1 zeigt ein Prinzipschaltbild eines radiometrischen Messgerätes nach dem Stand der Technik. Es ist ein radioaktiver Strahler 121 vorgesehen, der beispielsweise an der Außenwandung eines Behälters 120 befestigt ist. In dem Behälter ist ein Füllgut enthalten und die radioaktive Strahlung durchdringt den Behälter und ggf. das Füllgut und kann von dem auf der anderen Seite des Behälters angebrachten Szintillator 101 aufgenommen werden.

Der Szintillator 101 wandelt die auf ihn eintreffende radioaktive Strahlung in Lichtblitze 122 um, die von dem Photomultiplier 102 in Strompulse umgewandelt werden können. Anstelle des Photomultipliers können auch ein oder mehrere Photodioden oder ein Siliziumphotomultiplier vorgesehen sein. Alternativ zum Szintillator 101 und Lichtdetektor 102 kann auch ein Geiger-Müller-Zählrohr vorgesehen sein.

Das von dem Lichtdetektor 102 erzeugte elektrische Signal wird an die Auswerteschaltung des radiometrischen Messgeräts abgegeben. Diese Schaltung weist einen Koppelkondensator 124 auf und einen sich daran anschließenden Transimpedanzverstärker 125, dem ein RC-Glied 105, 104 parallel geschaltet ist. Die Strompulse des Lichtdetektors 102 werden durch den Transimpedanzverstärker 125 in Spannungspulse umgesetzt, die der Komparatorschaltung 108 zugeführt werden.

Die Komparatorschaltung 108 kann die Höhe der Spannungspulse analysieren und teilt ihr Ergebnis über die Leitung 130 der Steuerschaltung 128 mit, bei der es sich beispielsweise um einen Mikrocontroller handelt.

Das Messgerät erhält die für seinen Betrieb erforderliche Energie über die Zweileiterschleife 103, über welche die Steuerschaltung 128 und die Versorgungsschaltung 123 zur Energieversorgung des Lichtdetektors 102 versorgt werden.

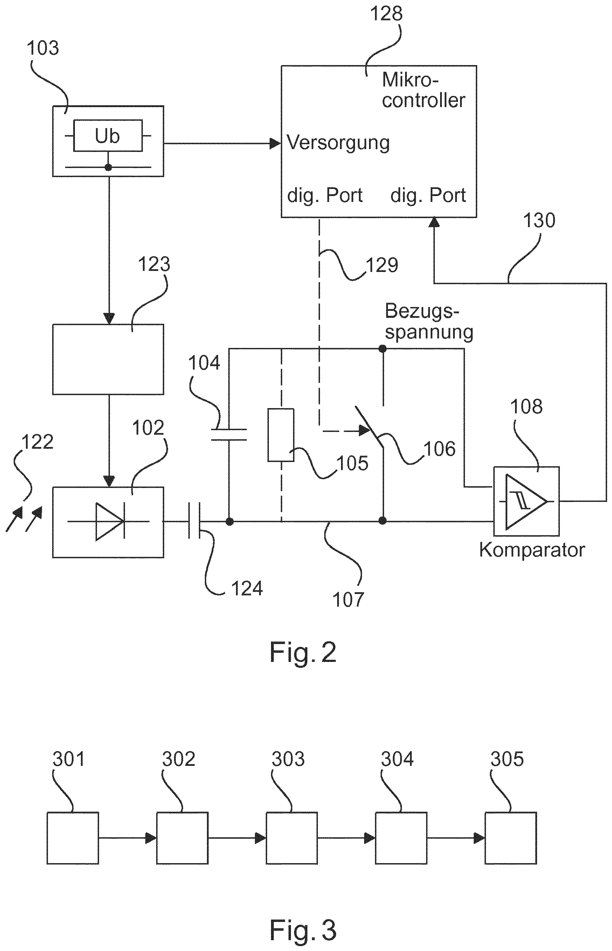

Fig. 2 zeigt ein Prinzipschaltbild eines radiometrischen Messgeräts gemäß einem Ausführungsbeispiel der Erfindung. Statt der Umsetzung von Strompulsen des Photomultipliers in Spannungspulse mittels des Transimpedanzverstärkers erfolgt in diesem Ausführungsbeispiel eine einfache Filterung oder Integration der Strompulse des Lichtdetektors 102 mittels passiver Bauelemente.

Bei den passiven Bauelementen handelt es sich beispielsweise um ein RC-Glied 105, 104, welches die vom Lichtdetektor 102 abgegebene Ladung zumindest teilweise speichert.

Die Komparatorschaltung 108 ist über den Koppelkondensator 124 und die Leitung 107 mit dem Lichtdetektor 102 verbunden. Der zweite Eingang der Komparatorschaltung ist über die Speicherkapazität 104 des Integrators und, falls vorgesehen, über den im Kondensator parallel geschalteten Widerstand 105 ebenfalls mit dem Koppelkondensator 124 verbunden.

Um den Kondensator 104 schneller entladen zu können, ist die Bypassleitung mit dem Schalter 106 vorgesehen, der zum schnellen Entladen der Kapazität 104 geschlossen wird. Gesteuert wird dieser Schalter 106 über den digitalen Port 129 der Steuerschaltung 128.

Die Kapazität des Koppelkondensators 124 beträgt beispielsweise ein Nanofarad, die Kapazität des Speicherkondensators 104 der Integratorschaltung beträgt beispielsweise 10 Pikofarad, also 1/100stel der Kapazität des Koppelkondensators. Der Widerstandswert des elektrischen Widerstands 105 beträgt beispielsweise 100 Kiloohm.

Der Kapazitätswert des Speicher- oder Filterkondensators 104 legt die Amplitude des vom Komparator 108 gemessenen Spannungssignals bei gegebenem Strompuls des Lichtdetektors 102 fest. Der Filterwiderstand 105 bestimmt die Abklingzeit bzw. Entladezeit des Kondensators 104 bei geöffnetem Schalter 106.

Die Abklingzeit sollte einerseits möglichst kurz sein, damit kurz aufeinanderfolgende Strompulse einzeln aufgelöst werden können. Andererseits würde eine lange Abklingzeit den Einsatz von langsamen Komparatoren ermöglichen, die wenig Betriebsleistung benötigen.

Zur Auskopplung des Strompulses weist die Spannungsversorgungsschaltung 123 ebenfalls einen elektrischen Widerstand auf, der von der Wirkung her parallel zum Widerstand 105 angeordnet ist. Die Zeitkonstante für die Abklingzeit kann deshalb nie größer werden als t = C (104) x R (123), weshalb die nachgeordnete Auswerteschaltung nicht beliebig langsam sein darf.

Durch Vorsehen der Bypassleitung mit dem Schalter 106 kann der Kondensator 104 schnell entladen werden. Der Widerstand 105 ist nicht erforderlich. Der Schalter 106 ist im Grundzustand geöffnet. Sobald der Lichtdetektor 102 Lichtblitze 122 aufnimmt und in elektrische Strompulse umwandelt und sich der Kondensator 104 somit auflädt, kann der Strompuls erkannt werden und der Schalter 106 wird geschlossen. Die Steuerung des Schalters kann beispielsweise durch Kopplung des Schalters mit dem Komparatorausgang 130 oder durch ein Steuersignal 129 der Steuerschaltung 128 erfolgen. Der Kondensator 104 wird nach dem Schließen des Schalters 106 nachdem der Puls erkannt wurde entladen und der nächste Puls kann verarbeitet werden. Die Zeitkonstante der Filterkombination 104, 105 wird somit im Prinzip von "sehr groß" auf "sehr klein" umgeschaltet.

Fig. 3 zeigt ein Flussdiagramm eines Verfahrens gemäß einem Ausführungsbeispiel der Erfindung.

In Schritt 301 wird radioaktive Strahlung in ein elektrisches Stromsignal umgewandelt, welches in Schritt 302 aufintegriert wird. Nachdem der Strompuls von der Integratorschaltung integriert wurde, kann in Schritt 303 ein daran angeschlossener Komparator ein Spannungssignal messen, das mit der in der Integratorschaltung gespeicherten Ladung korrespondiert. In Schritt 304 wird der Strompuls (direkt oder indirekt) detektiert, was zum Schließen eines Schalters führt, um die Integratorschaltung möglichst schnell zu entladen. In Schritt 305 wird der Schalter wieder geöffnet, sodass ein neuer Strompuls integriert und detektiert werden kann.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Radiometrisches Messgerät, aufweisend:
eine Detektoranordnung (101, 102), ausgeführt zum Umwandeln von radioaktiver Strahlung in ein elektrisches Signal, wobei das elektrische Signal ein Strompuls oder eine Mehrzahl an Strompulsen ist;
einen Integrator (104, 105), ausgeführt zum Integrieren des elektrischen Signals, wobei der Integrator (104, 105) einen Kondensator (104) und einen optionalen Widerstand (105) aufweist, wobei der Kondensator die von der Detektoranordnung (101, 102) abgegebene Ladung zumindest teilweise speichert;
einen Komparator (108) mit zwei Eingängen, wobei der erste Eingang mit einem Koppelkondensator (124) und über den Koppelkondensator (124) mit der Detektoranordnung verbunden ist, und wobei der zweite Eingang über den Kondensator (104) des Integrators ebenfalls mit dem Koppelkondensator (124) verbunden ist;
eine Steuerschaltung (128);
eine Bypassleitung mit einem Schalter (106), ausgeführt zum Entladen des Kondensators (104);
wobei die Steuerschaltung zur Detektion des elektrischen Signals und zum darauffolgenden Schließen des Schalters (106) ausgeführt ist, um den Integrator zu entladen, wobei das Umgehen eines Bauelements des Integrators zu einer Verkürzung der Entladezeit des Integrators (104, 105) führt, und anschließend der Schalter (106) wieder geöffnet wird, sodass ein neuer Strompuls integriert und detektiert werden kann;
wobei die Steuerung des Schalters (106) über eine Kopplung des Schalters mit einem Ausgang des Komparators (108) oder ein Steuersignal (129) der Steuerschaltung erfolgt.

2. Radiometrisches Messgerät nach Anspruch 1,
wobei der Integrator (104, 105) ein RC-Glied mit einem Kondensator (104) und einem elektrischen Widerstand (105) aufweist.

3. Radiometrisches Messgerät nach Anspruch 2,
wobei die Bypassleitung (107) zum Umgehen des elektrischen Widerstands (105) des Integrators (104, 105) ausgeführt ist.

4. Radiometrisches Messgerät nach einem der vorhergehenden Ansprüche,
wobei die Steuerschaltung (128) zum Öffnen des Schalters (106) nach einer voreingestellten Zeitspanne seit dem Schließen des Schalters ausgeführt ist.

5. Radiometrisches Messgerät nach Anspruch 4,
wobei die voreingestellte Zeitspanne das fünffache des Produktes des Kapazitätswerts des Kondensators (104) und des Widerstandswerts des elektrischen Widerstands (105) beträgt.

6. Radiometrisches Messgerät nach einem der vorhergehenden Ansprüche,
wobei die Detektoranordnung einen Szintillator (101) und einen Photomultiplier oder Siliziumphotomultiplier (102) aufweist.

7. Radiometrisches Messgerät nach einem der Ansprüche 1 bis 6,
wobei die Detektoranordnung (101, 102) ein Geiger-Müller Zählrohr aufweist.

8. Radiometrisches Messgerät nach einem der vorhergehenden Ansprüche,
ausgeführt zum Anschluss an eine 4-20mA Zweileiterschleife, über welche das Messgerät mit der zu seinem Betrieb erforderlichen elektrischen Energie versorgt wird.

9. Verfahren zum Messen eines Füllstands, eines Grenzstands, einer Dichte oder eines Durchsatzes mit einem radiometrischen Messgerät, aufweisend die Schritte:
Umwandeln von radioaktiver Strahlung, die von einem radioaktiven Strahler ausgesendet wird, in ein elektrisches Signal, wobei das elektrische Signal ein Strompuls oder eine Mehrzahl an Strompulsen ist;
Integrieren des elektrischen Signals, was zu einem Aufladen eines Kondensators (104) eines Integrators (104, 105) führt, wobei der Integrator (104, 105) einen Kondensator (104) und einen optionalen Widerstand (105) aufweist, wobei der Kondensator die vom Lichtdetektor 102 abgegebene Ladung zumindest teilweise speichert;
Schließen eines Schalters (106) des Integrators (104, 105), wenn das elektrische Signal mit einem Komparator (108) detektiert wird, um die Entladezeit des Integrators (104, 105) zu verkürzen, wobei der Komparator (108) zwei Eingänge aufweist, wobei der erste Eingang mit einem Koppelkondensator (124) und über einen Koppelkondensator (124) mit der Detektoranordnung verbunden ist, und wobei der zweite Eingang über den Kondensator (104) des Integrators ebenfalls mit dem Koppelkondensator (124) verbunden ist;
Auswerten der im Integrator (104, 105) zwischengespeicherten und daraufhin vom ihm wieder abgegebenen elektrischen Ladung;
Öffnen des Schalters (106), sodass ein neuer Strompuls integriert und detektiert werden kann,
wobei die Steuerung des Schalters (106) über eine Kopplung des Schalters (106) mit einem Ausgang des Komparators (108) oder ein Steuersignal (129) der Steuerschaltung erfolgt.

10. Programmelement, das, wenn es auf einer Steuerschaltung (128) eines radiometrischen Messgeräts ausgeführt wird, das Messgerät anleitet, die Schritte des Anspruchs 9 durchzuführen.

11. Computerlesbares Medium, auf dem ein Programmelement nach Anspruch 10 gespeichert ist.

## Claims

1. A radiometric measuring device, comprising
a detector arrangement (101, 102) adapted to convert radioactive radiation into an electric signal, wherein the electrical signal is a current pulse or a plurality of current pulses;
an integrator (104, 105) adapted to integrate the electrical signal, wherein the integrator (104, 105) comprises a capacitor (104) and an optional resistor (105), the capacitor at least partially storing the charge emitted by the detector arrangement (101, 102);
a comparator (108) having two inputs, wherein the first input is connected to a coupling capacitor (124) and connected via the coupling capacitor to the detector arrangement, and wherein the second input is also connected via the capacitor (104) of the integrator to the coupling capacitor (124);
a control circuit (128);
a bypass line having a switch (106) adapted to discharge the capacitor (104); wherein the control circuit is adapted to detect the electrical signal and then close the switch to discharge the integrator, wherein bypassing a component of the integrator results in a shortening of the discharge time of the integrator (104, 105), and then the switch (106) is opened again so that a new current pulse can be integrated and detected;
wherein the switch is controlled by coupling the switch to an output of the comparator (108) or a control signal (129) of the control circuit.

2. The radiometric measuring device according to claim 1,
wherein the integrator (104, 105) comprises an RC-circuit having a capacitor (104) and an electrical resistor (105).

3. The radiometric measuring device according to claim 2,
wherein the bypass line if adapted for bypassing the electrical resistor (105) of the integrator (104, 105).

4. The radiometric measuring device according to one of the preceding claims,
wherein the control circuit (128) is adapted to open the switch (106) after a preset period of time since the switch was closed.

5. The radiometric measuring device according to claim 4,
wherein the preset time period is five times the product of the capacitance value of the capacitor (104) and the resistance value of the electrical resistance (105).

6. The radiometric measuring device according to one of the preceding claims,
wherein the detector assembly comprises a scintillator (101) and a photomultiplier or silicon photomultiplier (102).

7. The radiometric measuring device according to any one of claims 1 to 6,
wherein the detector arrangement (101, 102) comprises a Geiger-Müller counter tube.

8. The radiometric measuring device according to any of the preceding claims,
designed for connection to a 4-20mA two-wire loop, which supplies the measuring instrument with the electrical energy required for its operation.

9. A method for measuring a fill level, a limit level, a density, or a flow rate by means of a radiometric measuring device, comprising the steps of:
converting radioactive radiation emitted by a radioactive source into an electrical signal, wherein the electrical signal is a current pulse or a plurality of current pulses;
integrating the electrical signal resulting in charging a capacitor (104) of an integrator (104, 105), wherein the integrator (104, 105) comprises a capacitor (104) and an optional resistor (105), the capacitor (104) at least partially storing the charge emitted by the light detector (102);
closing a switch (106) of the integrator (104, 105) when the electrical signal is detected by means of a comparator (108) to reduce the discharge time of the integrator (104, 105), wherein the comparator (108) has two inputs, wherein the first input is connected to a coupling capacitor (124) and via a coupling capacitor (124) to the detector arrangement, and the second input is also connected via the capacitor (104) of the integrator to the coupling capacitor (124);
evaluating the electrical charge temporarily stored in the integrator (104, 105) and then released by it again;
opening the switch (106) so that a new current pulse can be integrated and detected,
wherein the control of the switch (106) is effected via a coupling of the switch (106) with an output of the comparator (108) or a control signal (129) of the control circuit.

10. A program element which, when executed on a control circuit (128) of a radiometric measuring device, instructs the measuring device to perform the steps of claim 9.

11. A computer-readable medium on which a programme element according to claim 10 is stored.

## Revendications

1. Appareil de mesure radiométrique, présentant :
un agencement de détection (101, 102) conçu pour convertir un rayonnement radioactif en un signal électrique, le signal électrique étant une impulsion de courant ou une pluralité d'impulsions de courant ;
un intégrateur (104, 105) conçu pour intégrer le signal électrique, l'intégrateur (104, 105) présentant un condensateur (104) et une résistance optionnelle (105), le condensateur stockant au moins partiellement la charge délivrée par l'agencement de détection (101, 102) ;
un comparateur (108) à deux entrées, la première entrée étant reliée à un condensateur de couplage (124) et, par l'intermédiaire du condensateur de couplage (124), à l'agencement de détection, et la deuxième entrée étant également reliée, par l'intermédiaire du condensateur (104) de l'intégrateur, au condensateur de couplage (124) ;
un circuit de commande (128) ;
une ligne de dérivation avec un commutateur (106), conçue pour décharger le condensateur (104) ;
dans lequel le circuit de commande est conçu pour détecter le signal électrique et fermer ensuite le commutateur (106) pour décharger l'intégrateur, le contournement d'un composant de l'intégrateur entraînant une réduction du temps de décharge de l'intégrateur (104, 105), après quoi le commutateur (106) est à nouveau ouvert de sorte qu'une nouvelle impulsion de courant peut être intégrée et détectée ;
dans lequel le commutateur (106) est commandé par un couplage du commutateur à une sortie du comparateur (108) ou par un signal de commande (129) du circuit de commande.

2. Appareil de mesure radiométrique selon la revendication 1,
dans lequel l'intégrateur (104, 105) présente un élément RC formé d'un condensateur (104) et d'une résistance électrique (105) .

3. Appareil de mesure radiométrique selon la revendication 2,
dans lequel la ligne de dérivation (107) est conçue pour contourner la résistance électrique (105) de l'intégrateur (104, 105).

4. Appareil de mesure radiométrique selon l'une des revendications précédentes,
dans lequel le circuit de commande (128) est conçu pour ouvrir le commutateur (106) après un intervalle de temps préréglé à partir de la fermeture du commutateur.

5. Appareil de mesure radiométrique selon la revendication 4,
dans lequel l'intervalle de temps préréglé est cinq fois le produit de la valeur de capacité du condensateur (104) et de la valeur de résistance de la résistance électrique (105).

6. Appareil de mesure radiométrique selon l'une des revendications précédentes,
dans lequel l'agencement de détection présente un scintillateur (101) et un photomultiplicateur ou photomultiplicateur au silicium (102).

7. Appareil de mesure radiométrique selon l'une des revendications 1 à 6,
dans lequel l'agencement de détection (101, 102) présente un tube compteur Geiger-Müller.

8. Appareil de mesure radiométrique selon l'une des revendications précédentes,
conçu pour être connecté à une boucle à deux fils de 4-20 mA qui fournit à l'appareil de mesure l'énergie électrique nécessaire à son fonctionnement.

9. Procédé de mesure d'un niveau de remplissage, d'un niveau limite, d'une densité ou d'un débit avec un appareil de mesure radiométrique, présentant les étapes consistant à :
convertir un rayonnement radioactif émis par une source radioactive en un signal électrique, le signal électrique étant une impulsion de courant ou une pluralité d'impulsions de courant ;
intégrer le signal électrique, entraînant la charge d'un condensateur (104) d'un intégrateur (104, 105), l'intégrateur (104, 105) présentant un condensateur (104) et une résistance optionnelle (105), le condensateur stockant au moins partiellement la charge délivrée par le détecteur de lumière 102 ;
fermer un commutateur (106) de l'intégrateur (104, 105) lorsque le signal électrique est détecté avec un comparateur (108) pour réduire le temps de décharge de l'intégrateur (104, 105), le comparateur (108) présentant deux entrées, la première entrée étant reliée à un condensateur de couplage (124) et, par l'intermédiaire d'un condensateur de couplage (124), à l'agencement de détection, et la deuxième entrée étant également reliée, par l'intermédiaire du condensateur (104) de l'intégrateur, au condensateur de couplage (124) ;
évaluer la charge électrique temporairement stockée dans l'intégrateur (104, 105) et ensuite délivrée par celui-ci ;
ouvrir le commutateur (106) de sorte qu'une nouvelle impulsion de courant peut être intégrée et détectée,
dans lequel le commutateur (106) est commandé par un couplage du commutateur (106) à une sortie du comparateur (108) ou par un signal de commande (129) du circuit de commande.

10. Élément de programme qui, lorsqu'il est exécuté sur un circuit de commande (128) d'un appareil de mesure radiométrique, donne à l'appareil de mesure l'instruction d'exécuter les étapes de la revendication 9.

11. Support lisible par ordinateur sur lequel est stocké un élément de programme selon la revendication 10.
